Europäisches Patentamt

European Patent Office

Office européen des brevets

(11) Publication number: **0 148 143**
**B1**

# EUROPEAN PATENT SPECIFICATION

(45) Date of publication of patent specification: **25.04.90**

(21) Application number: **84850394.2**

(22) Date of filing: **17.12.84**

(51) Int. Cl.⁵: **A 23 L 1/211,** A 23 K 1/14, B 02 B 1/08 // A23K1/00, A23K1/18

(54) **A method for increasing the milk yield of dairy cows by means of a feed, a method for preparing the feed and an apparatus for carrying out said method.**

(30) Priority: **22.12.83 SE 8307125**

(43) Date of publication of application:
**10.07.85 Bulletin 85/28**

(45) Publication of the grant of the patent:
**25.04.90 Bulletin 90/17**

(84) Designated Contracting States:
**BE DE FR GB NL**

(56) References cited:
**DE-A-2 313 224**
**DE-A-2 339 908**
**DE-C- 923 109**
**US-A-2 987 399**
**US-A-3 173 792**

**CHEMICAL ABSTRACTS, vol. 92, no. 17, 28th April 1980, page 473, abstract no. 145418b, Columbus, Ohio, US; B. AHLSTROEM: "By-products from rapeseed protein concentrate (RPC) processing as feedstuffs. I. Fines to dairy cows".**

(73) Proprietor: **SVENSKA LANTMÄNNENS RIKSFÖRBUND, FÖRENING U.P.A.**
**Box 12238 S:t Göransgatan 160 A**
**S-102 26 Stockholm (SE)**

(72) Inventor: **Baeling, Peter**
**Lundhagsvägen 39**
**S-178 00 Ekerö (SE)**
Inventor: **Pettersson, Arne**
**Lillkalmarvägen 28 A**
**S-182 65 Djursholm (SE)**
Inventor: **Engstedt, Marie**
**Markims Prästgard**
**S-186 00 Vallentuna (SE)**
Inventor: **Sanne, Sven**
**Malma Ringväg 21**
**S-752 45 Uppsala (SE)**

(74) Representative: **Perneborg, Henry T. et al**
**Allied Attorneys Chemical AB P.O. Box 27097**
**S-102 51 Stockholm (SE)**

Courier Press, Leamington Spa, England.

# EP 0 148 143 B1

## Description

The milk yield of dairy cows has improved considerably during the last decades. The dairy cow has to be supplied with a sufficient amount of nutrients to supply the high milk yield. At very high milk yields the supply of energy is a critical factor in feeding. Normally the dairy man is forced to give the high lactating cows fat-containing feeds in order to satisfy their demand of energy.

Consequently it is natural in various types of dairy feeds to utilize fat-containing raw materials, for example feed fat, train oil, copra cakes, etc., which in respect to normal feed manufacturing technology offers difficulties.

In the temperate zones only various Brassica species are suitable for culture. This oil seed dominates the oil seed cultivation in countries like Germany, France, Canada and also Sweden.

Rape seeds and by-products from their extraction are well-known feed raw materials. The use of such seeds is often limited due to their content of various harmful substances, for example anti-trypsin, hemaglutinines, glucosinolates and other substances depending of their origin. To prepare the seeds or the extraction by-products for feed purposes they are often subjected to different forms of heat treatment, for example toasting of soybean meal. Such processes are well-known from technology and literature. By such treatment can, by suitable selection of water content, temperature and residence time, the harmful substance be destroyed so that feeding may take place without harmful effects.

In the feeding of dairy cows the extraction by-products are often used in the form of a meal, for example rape seed meal. In connection with the stripping of the extractive medium by use of direct steam, the meal is undergoing such a heat treatment that the enzyme myrosinase is destroyed. This among other things contributes to make the rape seed meal better suited for feeding.

Other such treatments are known for example from SE—A—357.658 where an oil seed, particularly rape seed, is heated with direct steam in a fluidized bed with a residence time of preferably 30 seconds. Under these conditions a complete enzyme deactivation occurs. A similar method is known from DE—A—23 39 908 where gas and steam are utilized to destroy bitter agents and harmful substances.

Other methods to remove harmful substances can include leaching with water at different temperatures with or without various additives (e.g. sodium carbonate and slaked lime) as is disclosed in SE—A—424.691 and DE—A—19 40 222.

With reference to the statements above it is natural to comprehend that unextracted oil seeds, particularly rape seeds (fat content 38—44%) would be an interesting supply of energy for high yielding cows. A further advantage to supply rape seed oil in the feed for the dairy cow is that the softness of the butter is improved and that better spreadability is achieved by the increase of the iodine number of the butter fat.

The use of rape seeds has so far been limited by their content of glycosinolates. These are not primarily toxic, but so are their decomposition products. The glycosinolates are decomposed by an enzyme that is occurring naturally in the seed, myrosinase. The toxic effect when feeding rape seed depends on the fact that the enzyme, during the digestion, gets the opportunity to act on the glycosinolates.

It is known that the myrosinases can be destroyed thermally. At our investigations regarding suitable conditions for heat inactivation of myrosinases in oil seeds, it has surprisingly been shown that by proceeding in accordance with the invention, one does not only achieve the expected inactivation of myrosinase but one also achieves as an end product an oil seed product, which by feeding to dairy cows significantly improves the milk yield.

The invention therefore relates to a method for improving the milk yield of dairy cows, the method being characterized by feeding the dairy cows with an oil seed product, especially rape seed, that has been heat treated by heating a cleaned oil seed for 20—60 minutes with the addition of water to a temperature of 65—85 degrees Celsius to achieve a water content of the product of 10—16% and after that the seed is heated for another 20—60 minutes and with the addition of water to a temperature of 85—100 degrees Celsius to achieve a water content of 14—18%, so that when the enzyme lipase is added to the end product the fat hydrolysis will be at most 30% during 100 minutes. Then the seed is crushed, optionally after a preceding cooling, in a roller crusher in which the gap between the rollers is selected between 0.3 to one times the seed diameter.

In connection with this invention "oil seed" should be understood as seeds from various Brassica species.

The invention includes also the method, described above, for treating oil seeds and the product so obtained.

By feeding dairy cows with the oil seed, treated according to the invention, one obtains a significantly improved milk yield which is shown by Example 3 below. As this Example shows, one obtains by using oil seed treated in accordance with the invention an increase in the daily milk yield (average per cow) from 28.1 to 30.5 kg per day 4% milk, i.e. 2.4 kg per day 4% milk corresponding to an increase of 8.5% at a very high milk yield level. With regard to the large fixed costs in milk production, the improved milk yield is of a considerable economical value to the farmer.

As described above, the heat treatment of the oil seed is performed under the addition of water. Direct steam of atmospheric pressure should preferably be used for the heat treatment by which the water addition is achieved by steam condensation.

2

The achieved water content depends on the moisture content of the raw material. By using a dry raw material the water content is achieved in the vicinity of the lower limit of the range stated.

It is preferred to crush the end product immediately after the heat treatment.

When an oil seed is treated according to the invention, the proteins in the seed are brought to coagulation in such a way that the oil is encapsulated by a coagulated protein skin. Owing to this, a great part of the fat is protected from digestion in the rumen of the cow.

In order to measure the encapsulating effect a series of experiments was conducted where differently treated rape seeds were digested with a solution of lipase during 100 minutes (according to McGown (1975), printed matter, Alta Lipids, Australia 1975). The amount of the hydrolysed fat was measured:

| Sample | % lipase hydrolysed fat |
|---|---|
| Untreated rape seed | 44 |
| Heat treated 40°C | 47 |
| Heat treated 60°C | 50 |
| Heat treated 80°C | 49 |
| Heat treated 100°C | 51 |
| Heat treated 120°C | 35 |
| Treated according to Example 1 of the invention | 24 |

By treating rape seed according to the invention, the hydrolysis of the fat can be retarded considerably. We have discovered that the oil seed product treated according to the invention for technical and economical reasons should show a fat hydrolysis according to the above mentioned method of at most 30%.

The heat treatment according to the invention can be performed batch-wise and continuously. Is the method performed batchwise any container with a stirrer can be utilized for the purpose. Utilizing the method continuously which is to be preferred it is of importance that a continuously operating apparatus is utilized that is so designed that the residence time between various parts is as even as possible, that is to say the residence time distribution should be narrow by which the treatment will be the same in all parts of a treated lot.

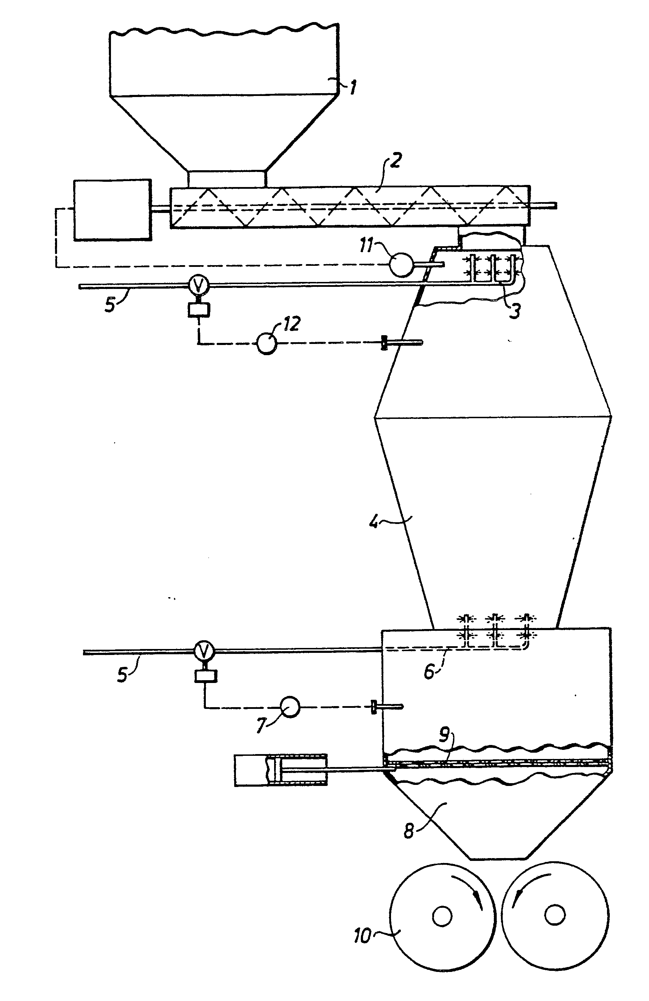

The invention consequently also relates to a continuously operating apparatus for the heat treatment according to the invention. The said apparatus includes one or several containers in series with means for introducing steam into the material to be treated and with an outfeed means. The apparatus is thereby characterized in that the outfeed means operates over the entire area of the container outlet. A preferred embodiment of the apparatus according to the invention is described below with reference to the enclosed drawing.

Cleaned rape seed is taken from the silo 1 and is fed with the feeder screw 2 into the apparatus 4. The feeding of the screw is controlled by the level control 11 in the upper part of the apparatus.

In the upper part of the apparatus steam 5 is added through a series of nozzles 3 where the steam is distributed over the entire cross section of the apparatus. The steam addition is controlled by a temperature controller 12 to the set point 75 degrees Celsius. The volume of the apparatus gives a residence time of 30 minutes. The outlet of the apparatus is designed as a pointed pyramid where the flow of seeds takes place over the entire cross sectional area of the apparatus.

In the lower part 8 of the apparatus further steam 5 is added through nozzles 6. The steam addition is controlled by a temperature controller 7 so that the temperature of the rape seed is 95 degrees Celsius. The volume of the container 8 gives a residence time of 30 minutes. In the container 8 is shown a feeder 9 of the grate feeder type. Other types of feeders are also useful on condition that they activate the seeds uniformly over the entire cross sectional area. The seeds fed are crushed in a roller crusher 10 of conventional design.

The invention is explained further by the following examples.

Example 1

Winter rape seed with a moisture content of 7% is fed from a bin with a constant controlled rate and is fed into a steam chamber. In the steam chamber in its upper part steam of atmospheric pressure or slightly above is added so that the seed temperature is increased to 75 degrees Celsius so that the water content will reach 12%. After the steam addition, the seed temperature is maintained on that level and after a period of time of 30 minutes the temperature is increased by further addition of steam of atmospheric pressure or slightly above to 95 degrees Celsius whereby the water content rises to 16%. After this steam addition the seed temperature is maintained for further 30 minutes. After that period of time the hot seed is crushed with roller crushers in which the gap between the rollers is 0.9 times the seed diameter. Then the seed is cooled by a controlled contact with cold air during which water vapour is removed and the temperature is lowered.

Example 2

A series of tests was conducted with various methods to destroy the myrosinase activity by heat treatment. Rape seeds were heated in a drying cabinet to different temperatures during 1 hour, whereupon the myrosinase activity was determined by letting the enzyme act on the glucosinolates under controlled conditions. During this reaction tiocyanate ions are liberated which together with a reagent form a coloured compound. The content thereof is determined with a photometric method the scale of which is selected according to a reference sample. A high content of active enzymes thus gives a greater amount of coloured compounds (high optical density, OD). An enzyme that is inactivated cannot produce coloured compounds and therefore the relative optical density is zero.

| Temperature degrees Celsius | Myrosinase activity $\Delta OD/g$ of meal |
|---|---|
| 20 | 99 |
| 40 | 83 |
| 60 | 98 |
| 80 | 95 |
| 100 | 90 |
| 120 | 0 |
| Steam treated rape seed according to Example 1, 95 degrees Celsius | 0 |

Example 3

The effect of the heat treatment was measured in practical feeding trials with dairy cows. The rape seed heat treated according to Example 1 was mixed in the dairy cows feed at a concentration of 8%. A control feed was manufactured with fat-free rape seed meal without any myrosinase activity. The content of rape seed meal corresponded to the amount of fat-free rape seed dry matter in the experimental feed. The experimetal feed and the control feed was fed to two groups of cows (16 cows in each group). The feed was given according to milk yield so that all animals were given the same amount of protein, energy and fat-free rape seed dry matter according to their milk yield.

Among other things the milk yield and milk fat content were recorded. The following results were obtained:

| | Treated rape seed meal | Rape seed |
|---|---|---|
| Kg 4% milk/day average per cow during the 2—24 weeks of lactation | 28.1 | 30.5 |
| Fat content in milk, %, average during 5—24 weeks of lactation | 4.02 | 4.00 |

The milk yield in the experimental group was surprisingly increased from 28.1 to 30.5 kg 4% milk per day and cow, i.e. with 2.4 kg per day and cow or an increase of 8.5% on an already high milk yield level.

**Claims**

1. A method for improving the milk yield of dairy cows, characterized by feeding the cows with an oil seed product, especially rape seed, that has been heat treated by heating cleaned oil seeds for 20—60 minutes and with the addition of water to a temperature of 65—85 degrees Celsius to obtain a water content in the product of 10—16% and then heating for additional 20—60 minutes and with the addition of water to a temperature of 80—100 degrees Celsius to obtain a water content of 14—18% so that the fat

4

# EP 0 148 143 B1

hydrolysis of the end product with lipase for 100 minutes becomes at most 30%, whereupon the heat treated seed product, optionally after cooling, is crushed in a roller crusher where the gap between the rollers is selected between 0.3 to 1 time the seed diameter.

2. A method for treating oil seeds so that they improve milk yield of dairy cows, characterized by heating the oil seeds for 20—60 minutes and with the addition of water to a temperature of 65—85 degrees Celsius to obtain a water content of the product of 10—16% and then heating for additional 20—60 minutes and with the addition of water to a temperature of 85—100 degrees Celsius to obtain a water content of 14—18% so that the fat hydrolysis of the end product with lipase for 100 minutes is at most 30%, whereupon the heat treated seed product, optionally after cooling, is crushed in a roller crusher where the gap between the rollers is selected between 0.3 to 1 time the seed diameter.

3. A continuously operating apparatus for performing the method according to claim 2 comprising one or several containers in series (4, 8) with means (3, 6) for the introduction of steam into the material to be treated and with an outfeed means (9), characterized in that the outfeed means operates over the entire area of the container outlet.

## Patentansprüche

1. Verfahren zur Verbesserung der Milchleistung von Milchkühen, gekennzeichnet durch Fütterung der Kühe mit einem Ölsamenprodukt, insbesondere Rapssamen, welches einer Wärmebehandlung unterzogen wurde, indem gereinigte Ölsamen 20—60 Minuten unter Zusatz von Wasser auf eine Temperatur von 65—85°C erhitzt wurden, um in dem Produkt einen Wassergehalt von 10—16% zu erhalten, und dann während zusätzlichen 20—60 Minuten unter Zusatz von Wasser auf eine Temperatur von 80—100°C erhitzt wurden, um einen Wassergehalt von 14—18% zu erhalten, so daß die Fetthydrolyse des Endproduktes mit Lipase während 100 Minuten höchstens 30% wird, worauf das wärmebehandelte Samenprodukt, gegebenenfalls nach Abkühlung, in einer Quetschmüle zerquetscht wird, bei der der Spalt zwischen der Quetschwalzen zwischen 0,3- bis 1 mal dem Samendurchmesser gewählt wird.

2. Verfahren zur Behandlung von Ölsamen, so daß sie die Milchleistung von Milchkühen erhöhen, gekennzeichnet durch Erhitzung der Ölsamen während 20—60 Minuten und unter Zusatz von Wasser auf eine Temperatur von 65—85°C, um einen Wassergehalt des Produktes von 10—16% zu erhalten und dann Erhitzung während zusätzlicher 20—60 Minuten und unter Zusatz von Wasser auf eine Temperatur von 85—100°C, um einen Wassergehalt von 14—18% zu erhalten, so daß die Fetthydrolyse des Endproduktes mit Lipase während 100 Minuten höchstens 30% ist, worauf das wärmebehandelte Samenprodukt, gegebenenfalls nach Abkühlung, in einer Quetschmüle zerquetscht wird, bei der der Spalt zwischen den Quetschwalzen zwischen 0,3- bis 1 mal dem Samendurchmesser gewählt wird.

3. Kontinuierlich arbeitende Vorrichtung zur Durchführung des Verfahrens nach Anspruch 2 mit einem oder mehreren in Reihe angeordneten Behältern (4, 8) mit Mitteln (3, 6) zur Einleitung von Dampf in das zu behandelnde Material und mit einer Austragseinrichtung (9), dadurch gekennzeichnet, daß die Austragseinrichtung über die ganze Fläche des Behälterauslasses arbeitet.

## Revendications

1. Procédé d'amélioration du rendement laitier de vaches laitières, caractérisé par l'alimentation des vaches par un produit de graines oléagineuses, en particulier de graines de colza, qui a été traité à chaud en chauffant des graines oléagineuses nettoyées pendant 20 à 60 minutes et avec addition d'eau à une température de 65 à 85°C pour obtenir un contenu en eau dans le produit de 10 à 16% puis en chauffant pendant encore 20 à 60 minutes avec addition d'eau à une température de 80 à 100°C pour obtenir un contenu en eau de 14 à 18% de sorte que l'hydrolyse des graisses du produit final par de la lipase pendant 100 minutes atteint au plus 30%, à la suite de quoi le produit de graine traité à chaud, optionnellement après refroidissement, est broyé dans un broyeur à rouleaux dans lequel l'intervalle entre les rouleaux est choisi entre 0,3 et une fois le diamètre des graines.

2. Procédé de traitement de graines oléagineuses pour qu'elles améliorent le rendement en lait de vaches laitières, caractérisé par un chauffage des graines oléagineuses pendant 20 à 60 minutes avec addition d'eau à une température de 65 à 85°C pour obtenir un contenu en eau du produit de 10 à 16%, puis un chauffage pendant 20 à 60 minutes supplémentaires avec addition d'eau à une température de 85 à 100°C pour obtenir un contenu en eau de 14 à 18% de sorte que l'hydrolyse des graisses du produit final par de la lipase pendant 100 minutes est au plus de 30%, à la suite de quoi, le produit de graines traité à chaud, optionnellement après refroidissement, est broyé dans un broyeur à rouleaux dans lequel l'espacement entre les rouleaux est choisi entre 0,3 et une fois le diamètre des graines.

3. Appareil à fonctionnement continu pour la mise en oeuvre du procédé selon la revendication 2, comprenant un ou plusieurs réservoirs en série (4, 8) et des moyens (3, 6) pour l'introduction de vapeur dans le matériau à traiter et un moyen d'extraction (9), caractérisé en ce que le moyen d'extraction agit sur toute la surface de la sortie du réservoir.